# EUROPÄISCHE PATENTSCHRIFT

(11) **EP 3 481 715 B1**
(45) Veröffentlichungstag und Bekanntmachung des Hinweises auf die Patenterteilung: **19.03.2025**
(21) Anmeldenummer: 17734740.8
(22) Anmeldetag: 03.07.2017
(51) Int. Cl.: B63G 8/08

(54) **TANKSYSTEM FÜR EIN UNTERSEEBOOT MIT BRENNSTOFFZELLE**
TANK SYSTEM FOR A SUBMARINE HAVING A FUEL CELL
SYSTÈME DE RÉSERVOIR POUR SOUS-MARIN COMPRENANT UNE PILE À COMBUSTIBLE

(30) Priorität: 05.07.2016 DE 102016212186
(43) Veröffentlichungstag der Anmeldung: 15.05.2019
(73) Patentinhaber: thyssenkrupp Marine Systems GmbH, 24143 Kiel (DE); thyssenkrupp AG, 45143 Essen (DE)
(72) Erfinder: PEIN, Marc, 24147 Kiel (DE); MECHSNER, Alfred, 24148 Kiel (DE); KRUMMRICH, Stefan, 24634 Padenstedt (DE); RUSER, Dennis, 24211 Preetz (DE); KUBISCH, Stephan, 24159 Kiel (DE); LEHR, Thomas, 24214 Blickstedt (DE)
(74) Vertreter: thyssenkrupp Intellectual Property GmbH
(86) Internationale Anmeldenummer: PCT/EP2017/066514
(87) Internationale Veröffentlichungsnummer: WO 2018/007326

(56) Entgegenhaltungen:
- GB-A- 2 250 130
- US-A- 6 063 515
- US-A- 953 881

## Beschreibung

Die Erfindung betrifft ein Unterseeboot, wobei das Unterseeboot Energie mittels einer Brennstoffzelle erzeugt, wobei der für die Brennstoffzelle notwendige Wasserstoff in einem Reformer aus Methanol gewonnen wird. Zur Lagerung des Methanols und des Wassers weist das Unterseeboot wenigstens drei Tanks auf in welchen wechselweise Methanol bzw. Wasser gelagert wird.

Im Bereich nicht nuklearbetriebener Unterseeboote ist die Verwendung von Brennstoffzellen bekannt, beispielsweise die Klasse 212 A. Der für den Betrieb der Brennstoffzelle benötigte Wasserstoff wird in Metallhydridspeichern gelagert.

Metallhydridspeicher haben sich für Boote mit einer Verdrängung von etwa 2000 t als sehr gut einsetzbar erwiesen. Für Boote mit einer deutlich höheren Verdrängung kann es jedoch effizienter sein, zusätzlich oder anstelle der Metallhydridspeicher einen Reformer in das Boot zu integrieren und dafür Methanol in kompakter Lagerform mitzuführen.

Während des Einsatzes werden Methanol und Sauerstoff verbraucht und Wasser und Kohlendioxid erzeugt. Werden erzeugtes Wasser und Kohlendioxid aus dem Boot ausgebracht, so verringert sich das Gewicht, der Auftrieb des Bootes verändert sich dadurch. Um dieses zu kompensieren müsste Ballastwasser aufgenommen werden.

Aus der US 6 063 515 A ist eine Methode zum Betrieb eines Brennstoffzellensystems bekannt.

Aufgabe der Erfindung ist es, ein Unterseeboot zu schaffen, welches Methanol als Brennstoff mitnimmt und eine möglichst geringe Veränderung des Auftrieb beim Verbrauch des Methanol aufweist.

Gelöst wird diese Aufgabe durch das Unterseeboot mit den in Anspruch 1 angegebenen Merkmalen, sowie durch das Verfahren mit den in Anspruch 12 angegebenen Merkmalen. Vorteilhafte Weiterbildungen ergeben sich aus den Unteransprüchen, der nachfolgenden Beschreibung sowie der Zeichnung.

Das erfindungsgemäße Unterseeboot weist wenigstens eine erste Brennstoffzelle und wenigstens einen ersten Reformer auf. Der wenigstens eine erste Reformer ist zur Herstellung von Wasserstoff aus Methanol ausgebildet. Das Unterseeboot weist wenigstens einen ersten Tank, einen zweiten Tank und einen dritten Tank auf. Der erste Tank ist mit dem Reformer für Fluidtransport verbindbar, der zweite Tank ist mit dem Reformer für Fluidtransport verbindbar und der dritte Tank ist mit dem Reformer für Fluidtransport verbindbar. Weiter ist der erste Tank mit dem zweiten Tank für Fluidtransport verbindbar, der erste Tank ist mit dem dritten Tank für Fluidtransport verbindbar und der zweite Tank ist mit dem dritten Tank für Fluidtransport verbindbar.

Zur Herstellung von Wasserstoff aus Methanol muss der Reformer sowohl mit Methanol als auch mit Wasser versorgt werden. Um dieses effizient tun zu können weist das Unterseeboot wenigstens drei Tanks auf, vorzugsweise mehr als drei Tanks. In diesen Tanks kann Methanol oder Wasser gelagert werden. Da es somit keine definierten Methanollagertanks und Wasserlagertanks gibt, muss jeder Tank mit dem Reformer verbunden sein. Zusätzlich ist es notwendig Fluide auch von einem in den anderen Tank umpumpen zu können, so dass jeder Tank mit jedem anderen Tank verbindbar ist.

Im Sinne der Erfindung ist mit Wasser insbesondere Prozesswasser gemeint, das im Zusammenhang mit dem Betrieb des Reformers oder der Brennstoffzelle benötigt oder erzeugt wird. Das an Bord mitgeführte Trinkwasser ist hiervon zu unterscheiden. Im Regelfall weist Wasser im Sinne der Erfindung Verunreinigungen auf, insbesondere Methanol, es ist kein chemisch reines Wasser gemeint.

Typischerweise wird vor Abfahrt eines Schiffes ein Tank Wasser aufweisen, alle anderen Tanks werden mit Methanol gefüllt sein. Vorzugsweise ist der Tank, welcher Wasser aufweist, zu einem geringen Anteil gefüllt, sodass dieser Tank entstehendes Reaktionswasser und Kondensat vom Reformer und/oder der Brennstoffzelle aufnehmen kann. Während der Fahrt wird Methanol entnommen und sobald ein Tank, in welchem Methanol gelagert war, leer ist, wird in diesen entstehendes Reaktionswasser und Kondensat vom Reformer und/oder der Brennstoffzelleeingeleitet.

Hierdurch kann die Lagerung beider Fluide, Methanol und Wasser, in sehr kompakter Weise erfolgen. Gleichzeitig kann der Auftrieb des Unterseebootes beim Betrieb nahezu konstant gehalten werden.

Erfindungsgemäß ist der erste Tank an der Unterseite mit einem ersten Auslassventil und an der Oberseite mit einem ersten Einlassventil verbunden. Der zweite Tank ist an der Unterseite mit einem zweiten Auslassventil und an der Oberseite mit einem zweiten Einlassventil verbunden. Der dritte Tank ist an der Unterseite mit einem dritten Auslassventil und an der Oberseite mit einem dritten Einlassventil verbunden.

Bevorzugt ist jeder Tank mit einem einzigen Einlassventil auf der Oberseite für den Transport von Methanol und/oder Wasser versehen.

Erfindungsgemäß sind das erste Auslassventil, das zweite Auslassventil und das dritte Auslassventil über eine Auslassverbindung verbunden.

Erfindungsgemäß sind das erste Einlassventil, das zweite Einlassventil und das dritte Einlassventil über eine Einlassverbindung verbunden.

Erfindungsgemäß sind die Einlassverbindung und die Auslassverbindung über eine Pumpe miteinander verbunden. Hierdurch kann besonders einfach und mit nur einem einzigen aktiven Pumpelement Flüssigkeit aus jedem Tank in jeden anderen Tank befördert werden.

In einer weiteren Ausführungsform der Erfindung ist die Einlassverbindung mit einer Betankungskupplung verbunden. Über die Betankungskupplung kann Methanol oder Wasser in die Einlassverbindung und über die Einlassverbindung in einen ausgewählten Tank befördert werden.

Erfindungsgemäß ist der erste Tank an der Unterseite mit einem ersten Methanolablassventil verbunden. Der zweite Tank ist an der Unterseite mit einem zweiten Methanolablassventil verbunden und der dritte Tank ist an der Unterseite mit einem dritten Methanolablassventil verbunden.

Erfindungsgemäß sind das erste Methanolablassventil, das zweite Methanolablassventil und das dritte Methanolablassventil über eine Methanolablassverbindung verbunden.

Erfindungsgemäß ist die Methanolablassverbindung über wenigstens eine erste Methanolablasspumpe mit dem wenigstens einen ersten Reformer verbunden.

Durch diesen Aufbau kann Methanol aus jedem Tank in den ersten Reformer befördert werden.

Erfindungsgemäß ist der erste Tank an der Unterseite mit einem ersten Wasserablassventil verbunden. Der zweite Tank ist an der Unterseite mit einem zweiten Wasserablassventil verbunden. Der dritte Tank ist an der Unterseite mit einem dritten Wasserablassventil verbunden.

Erfindungsgemäß sind das erste Wasserablassventil, das zweite Wasserablassventil und das dritte Wasserablassventil über eine Wasserablassverbindung verbunden.

Erfindungsgemäß ist die Wasserablassverbindung über wenigstens eine erste Wasserablasspumpe mit dem wenigstens einen ersten Reformer verbunden.

Durch diesen Aufbau kann Wasser aus jedem Tank in den ersten Reformer befördert werden.

In einer besonders bevorzugten Ausdrucksform sind das Auslassventil, das Methanolablassventil und das Wasserablassventil eines Tank jeweils über eine gemeinsame Verbindung mit dem Tank verbunden, sodass an der Unterseite nur eine Öffnung für eine Verbindung zu den drei Ventilen vorhanden ist.

In einer weiteren Ausführungsform der Erfindung sind der erste Tank, der zweite Tank und der dritte Tank gegenüber der Atmosphäre des Unterseeboots abgeschlossen, wobei das Unterseeboot eine Vorrichtung zur Einleitung von Inertgas in wenigstens den ersten Tank, den zweiten Tank und den dritten Tank aufweist. Da Methanol giftig ist, sollte Methanol nicht in gasförmiger Form in die Atmosphäre abgegeben werden. Dieses kann insbesondere durch eine Schutzgasatmosphäre erreicht werden. Gleichzeitig ist hierdurch auch ein Explosionsschutz gewährleistet.

In einer weiteren Ausführungsform der Erfindung ist das Inertgas Stickstoff, Kohlendioxid, Helium, Neon, Argon oder ein Gemisch hieraus. Besonders bevorzugt wird Stickstoff, Kohlendioxid oder Argon verwendet, da diese Gase zu verschiedenen Zwecken an Bord eines Unterseeboots sein können.

In einer weiteren Ausführungsform der Erfindung sind wenigstens zwei Tanks zueinander benachbart angeordnet. Die zwei zueinander benachbarten Tanks sind an der Oberseite mit einem Überlaufrohr verbunden, wobei die Verbindungen zwischen dem Überlaufrohr und den Tanks jeweils auf der dem benachbarten Tank gegenüberliegenden Seite angeordnet sind. Diese Anordnung stellt sicher, dass auch bei extremer Schräglage des Unterseeboots keine Flüssigkeit aus einem Tank in einen benachbarten Tank fließt.

In einer weiteren Ausführungsform der Erfindung weist das Unterseeboot wenigstens einen Ausgasungstank auf. Das Wasser kann nach dem Ausgasen aus dem Ausgasungstank über die Einlassverbindung in einen ausgewählten Tank befördert werden.

In einer weiteren Ausführungsform der Erfindung weist das Unterseeboot einen kathodenseitigen Wasserabscheider auf, wobei der kathodenseitige Wasserabscheider mit der Kathodenseite der wenigstens einen Brennstoffzelle verbunden ist, wobei der kathodenseitige Wasserabscheider mit dem Ausgasungstank verbunden ist. Reaktionswasser von der Kathodenseite der Brennstoffzelle wird zunächst in den Ausgasungstank befördert. Das Reaktionswasser von der Kathodenseite der Brennstoffzelle ist mit Sauerstoff angereichert. Dieser Sauerstoff kann im Ausgasungstank an die Atmosphäre abgegeben werden.

Reaktionswasser von der Anodenseite der Brennstoffzelle fällt in deutlich geringerem Mengen an, da das Produkt auf der Kathodenseite anfällt. Da dieses Wasser aber Wasserstoff enthalten kann wird es vorzugsweise in einem getrennten Tank gelagert oder zur Befeuchtung des Wasserstoffstroms in der Zuführung zur Anodenseite der Brennstoffzelle verwendet.

In einer weiteren Ausführungsform der Erfindung ist der Ausgasungstank mit dem Reformer zur Überführung von Kondensat aus dem Reformer in den Ausgasungstank verbunden.

In einer weiteren Ausführungsform der Erfindung ist der Ausgasungstank mit der Atmosphäre des Unterseeboots verbunden. Da hier hauptsächlich Sauerstoff abgegeben wird, welcher von der Besatzung verbraucht wird, entstehen keine weiteren Anforderungen an Lagerung oder Entsorgung.

In einer weiteren Ausführungsform der Erfindung weist das Unterseeboot eine gerade Anzahl an Tanks auf, wobei die eine Hälfte der Tanks auf der Steuerbordseite und die andere Hälfte der Tanks auf der Backbordseite angeordnet sind. In einer vorteilhaften Weiterbildung dieser Ausführungsform sind weist das Unterseeboot insgesamt acht Tanks auf, wobei vier Tanks auf der Steuerbordseite und vier Tanks auf der Backbordseite angeordnet sind. Besonders bevorzugt handelt es sich bei einem der Tanks um einen Ausgasungstank. Beim Verlassen des Hafens können somit sechs Tanks mit Methanol und ein Tank mit etwas Wasser gefüllt sein. Hieraus ergibt sich die effizienteste Platznutzung an Bord.

In einer weiteren Ausführungsform weist das Unterseeboot einen Druckkörper auf und die Tanks sind außerhalb des Druckkörpers angeordnet. Bevorzugt sind diese zwischen dem Druckkörper des Unterseeboots und einer weiteren Verkleidung angeordnet. Besonders bevorzugt sind diese um einen weiteren Tank, insbesondere den Sauerstofftank herum angeordnet.

In einer weiteren Ausführungsform der Erfindung weist jeder Tank nur einen Einlass für Flüssigkeiten auf der Oberseite und einen Auslass für Flüssigkeiten auf der Unterseite auf. Zusätzlich weist jeder Tank bevorzugt wenigstens einen Einlass für Schutzgas auf. Weiter bevorzugt weist jeder Tank wenigstens ein Überlaufrohr auf. Zusätzlich kann jeder Tank einen Sensor für den Füllstand und gegebenenfalls Druck- und/oder Temperatursensoren aufweisen.

In einer weiteren Ausführungsform der Erfindung bildet der Druckkörper wenigstens einen Teil des Tanks.

In einer weiteren Ausführungsform der Erfindung weist wenigstens ein Tank eine Blase auf, wobei die Blase zur Aufnahme von Flüssigkeit ausgebildet ist. Unter einer Blase wird eine flexible Vorrichtung zur Aufnahme von Flüssigkeit verstanden, welche üblicherweise aus einem Kunststoff gebildet ist. Die Blase vergrößert ihr Volumen, wenn Flüssigkeit hineingegeben wird bzw. verkleinert ihr Volumen, wenn Flüssigkeit entnommen wird. Durch die Blase kann ein Kontakt zwischen der Flüssigkeit und der Tankwand vermeiden werden. Vorteil der Verwendung einer Blase kann beispielsweise der Verzicht auf eine Schutzgasatmosphäre sein, da Methanoldämpfe nicht aus der Blase nach außen gelangen können.

In einem weiteren Aspekt betrifft die Erfindung ein Verfahren zum Betreiben eines erfindungsgemäßen Unterseeboots. Der wenigstens eine erste Tank ist mit Methanol befüllt, der wenigstens eine zweite Tank ist mit Wasser befüllt. Methanol wird aus dem ersten Tank in wenigstens einen ersten Reformer befördert. Wasser wird aus dem zweiten Tank in den wenigstens einen ersten Reformer befördert. Reaktionswasser wird von der Brennstoffzelle in den zweiten Tank befördert wird. Kondensat wird vom Reformer in den zweiten Tank befördert. Hierbei muss das Reaktionswasser von der Brennstoffzelle bzw. das Kondensat vom Reformer nicht unmittelbar in den zweiten Tank befördert werden, sondern kann zunächst in einen Ausgasungstank und aus dem Ausgasungstank in den zweiten Tank befördert werden.

In einer weiteren Ausführungsform der Erfindung wird Methanol aus dem ersten Tank entnommen, bis der Füllstand unter 5 % des Tankvolumens, bevorzugt unter 3 % des Tankvolumens, besonders bevorzugt unter 2 % des Tankvolumens ist, wobei der Füllstand über 1 % des Tankvolumens ist.

Durch einen Mindestfüllstand wird ein Trockenlaufen der Pumpen verhindert.

In einer weiteren Ausführungsform der Erfindung wird in den ersten Tank mit einem Füllstand von 1 bis 5 %, bevorzugt von 1 bis 3 %, besonders bevorzugt von 1 bis 2 % des Tankvolumens Methanol Reaktionswasser von der Brennstoffzelle und/oder Kondensat vom Reformer befördert.

Vorteil bei dieser Vermischung ist, dass die Toxizität des Gemisches aus Wasser und Methanol ausreichend gering ist, sodass das Gemisch ohne weitere Aufreinigung in die Umgebung abgegeben werden kann.

In einer weiteren Ausführungsform der Erfindung wird Wasser aus dem zweiten Tank entnommen, bis der Füllstand unter 5 % des Tankvolumens, bevorzugt unter 3 % des Tankvolumens, besonders bevorzugt unter 2 % des Tankvolumens ist, wobei der Füllstand über 1 % des Tankvolumens ist.

Durch einen Mindestfüllstand wird ein Trockenlaufen der Pumpen verhindert.

In einer weiteren Ausführungsform der Erfindung wird in den zweiten Tank mit einem Füllstand von 1 bis 5 %, bevorzugt von 1 bis 3 %, besonders bevorzugt von 1 bis 2 % des Tankvolumens Wasser Methanol befördert wird. Dieses Auffüllen erfolgt üblicher Weise durch Betanken von außen, beispielsweise im Hafen oder durch einen Einsatzgruppenversorger.

Dieser Restgehalt an Wasser ist nicht störend, da die Stöchiometrie von Wasser zu Methanol im Reformer hierdurch nicht maßgeblich verändert wird. Außerdem stellt es ein Optimum zwischen maximal möglicher Lagermenge an Methanol und Trockenlaufschutz für die Pumpen dar.

Nachfolgend ist das erfindungsgemäße Unterseeboot anhand eines in der Zeichnung dargestellten Ausführungsbeispiels näher erläutert.

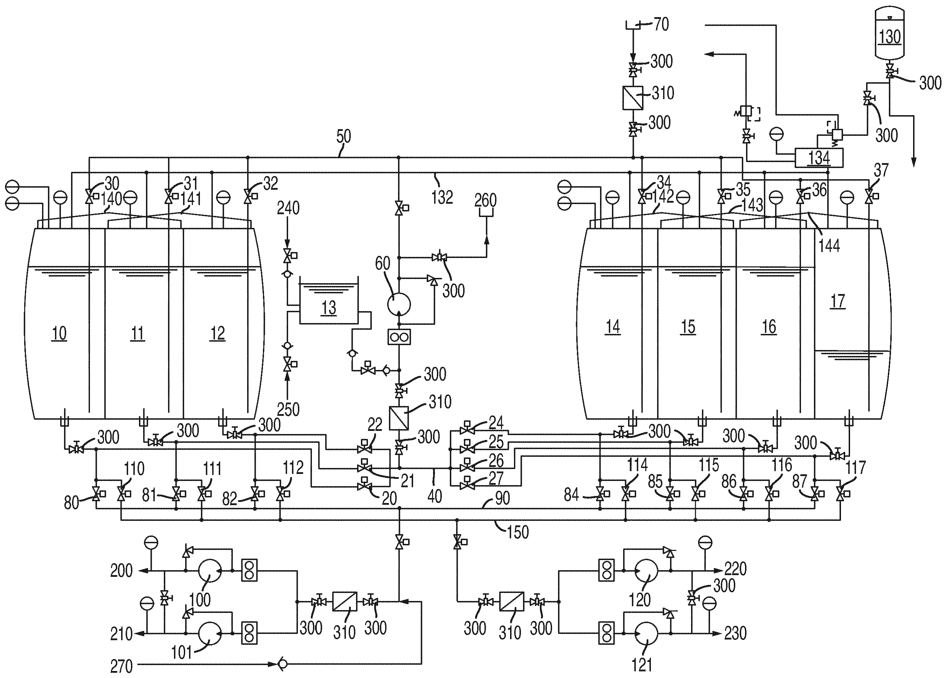

### Fig. 1 schematische Zeichnung

In Fig. 1 ist das Tanksystem eines erfindungsgemäßen Unterseeboots gezeigt. Das Tanksystem weist acht Tanks 10, 11, 12, 13, 14, 15, 16, 17 auf, wobei ein Tank 13 als Ausgasungstank ausgeführt ist. Die acht Tanks 10, 11, 12, 13, 14, 15, 16, 17 sind schiffbautechnisch ausgeführt, wobei vier Tanks Steuerbord und vier Tanks Backbord angeordnet sind. Die sieben Tanks 10, 11, 12, 14, 15, 16, 17 können mit Methanol oder Wasser gefüllt sein. Vor Verlassen des Hafens sind beispielsweise sechs Tanks 10, 11, 12, 14, 15, 16 mit Methanol als Treibstoff voll gefüllt, während ein Tank 17 Wasser enthält, wobei der Füllstand gering ist.

Die Tanks 10, 11, 12, 14, 15, 16, 17 sind mit Auslassventil 20, 21, 22, 24, 25, 26, 27 verbunden. Weiter sind die Tanks 10, 11, 12, 14, 15, 16, 17 mit Einlassventilen 30, 31, 32, 34, 35, 36, 37 verbunden. Die Auslassventile 20, 21, 22, 24, 25, 26, 27 sind über eine Auslassverbindung 40 miteinander verbunden, die Einlassventile 30, 31, 32, 34, 35, 36, 37 sind über eine Einlassverbindung 50 miteinander verbunden. Die Auslassverbindung 40 ist über eine Pumpe 60 mit der Einlassverbindung 50 verbunden. Hierdurch ist möglich Methanol oder Wasser von einem beliebigen Tank in einen anderen beliebigen Tank zu befördern, um beispielsweise das Boot zu trimmen.

Über die Betankungskupplung 70 kann Methanol in die Einlassverbindung 50 und über die Einlassverbindung 50 und die Einlassventile 30, 31, 32, 34, 35, 36, 37 in die Tanks 10, 11, 12, 14, 15, 16, 17 befördert werden. Die Betankungskupplung 70 ist vorzugsweise so angeordnet, dass das Unterseeboot leicht betankt werden kann, beispielsweise ist die Betankungskupplung 70 im Turm angeordnet.

Die Tanks 10, 11, 12, 14, 15, 16, 17 sind mit Methanolablassventilen 80, 81, 82, 84, 85, 86, 87 verbunden, die Methanolablassventile 80, 81, 82, 84, 85, 86, 87 sind über eine Methanolablassverbindung 90 miteinander verbunden. Hierdurch kann Methanol aus den Tanks 10, 11, 12, 14, 15, 16, 17 mittels einer Pumpe 100 zu einem ersten Reformer 200 befördert werden. Im gezeigten Beispiel kann über eine weitere Pumpe 101 Methanol zu einem zweiten Reformer 210 befördert werden. Die redundante Ausführung erhöht die Sicherheit der Energieversorgung.

Die Tanks 10, 11, 12, 14, 15, 16, 17 sind mit Wasserablassventilen 110, 111, 112, 114, 115, 116, 117 verbunden, die Wasserablassventile 110, 111, 112, 114, 115, 116, 117 sind über eine Wasserablassverbindung 150 miteinander verbunden. Hierdurch kann Wasser aus den Tanks10, 11, 12, 14, 15, 16, 17 mittels einer Pumpe 120 zu einem ersten Reformer einer 20 befördert werden. Im gezeigten Beispiel kann über eine weitere Pumpe 121 Methanol zu einem zweiten Reformer 230 befördert werden. Die redundante Ausführung erhöht die Sicherheit der Energieversorgung.

Aus einem Inertgasvorrat 130 kann über eine Inertgasleitung 132 Inertgas in die Tanks 10, 11, 12, 14, 15, 16, 17 geleitet werden. Zur Regelung wird vorzugsweise eine Inertgasregelung 134 eingesetzt.

Die Tanks 140, 141, 142, 143, 144 sind mittels Überläufen 140, 141, 142, 143, 144 verbunden. Durch die Anordnung der Überläufe 140, 141, 142, 143, 144 ist gewährleistet, dass auch bei Schräglage des Unterseebootes Wasser und Methanol nicht von einem in den anderen Tank gelangen können. Hierzu verbindet ein Überlauf zwei benachbarte Tanks an der Oberseite jeweils an der dem angrenzenden Tank entgegengesetzten Seite.

Bevorzugt ist jeweils unterhalb jedes Tanks die eine ausgehende Verbindung mittels eines manuellen Absperrventils 300 verschließbar.

Zum Schutz der Gesamtanlage können an verschiedenen Stellen Filter 310 integriert sein. Um die Filter 310 austauschen zu können, befindet sich jeweils am Eingang und Ausgang des Filters 310 ein manuelles Absperrventil 300.

Um Wasser wieder abgeben zu können ist eine Enttankungskupplung 260 vorgesehen. Diese Enttankungskupplung 260 ist vorzugsweise so hinter der Auslassverbindung 40 und der Pumpe 60 angeordnet, dass über die Auslassverbindung 40 und die Pumpe 60 Wasser, aber auch Methanol, zur Entleerung der Tanks 140, 141, 142, 143, 144 vom Unterseeboot gebracht werden kann.

Es kann vorgesehen sein, dass Methanol welches im Reformer nicht vollständig umgesetzt wurde über eine Verbindung 270 zurückgeführt werden kann.

### Bezugszeichen

- 10: Tank
- 11: Tank
- 12: Tank
- 13: Tank
- 14: Tank
- 15: Tank
- 16: Tank
- 17: Tank
- 20: Auslassventil
- 21: Auslassventil
- 22: Auslassventil
- 24: Auslassventil
- 25: Auslassventil
- 26: Auslassventil
- 27: Auslassventil
- 30: Einlassventil
- 31: Einlassventil
- 32: Einlassventil
- 34: Einlassventil
- 35: Einlassventil
- 36: Einlassventil
- 37: Einlassventil
- 40: Auslassverbindung
- 50: Einlassverbindung
- 60: Pumpe
- 70: Betankungskupplung
- 80: Methanolablassventil
- 81: Methanolablassventil
- 82: Methanolablassventil
- 84: Methanolablassventil
- 85: Methanolablassventil
- 86: Methanolablassventil
- 87: Methanolablassventil
- 90: Methanolablassverbindung
- 100: Pumpe
- 101: Pumpe
- 110: Wasserablassventil
- 111: Wasserablassventil
- 112: Wasserablassventil
- 114: Wasserablassventil
- 115: Wasserablassventil
- 116: Wasserablassventil
- 117: Wasserablassventil
- 120: Pumpe
- 121: Pumpe
- 130: Inertgasvorrat
- 132: Inertgasleitung
- 134: Inertgasregelung
- 140: Überlauf
- 141: Überlauf
- 142: Überlauf
- 143: Überlauf
- 144: Überlauf
- 150: Wasserablassverbindung
- 200: zum ersten Reformer
- 210: zum zweiten Reformer
- 220: zum ersten Reformer
- 230: zum zweiten Reformer
- 240: von der Brennstoffzelle
- 250: vom Reformer
- 260: Enttankungskupplung
- 270: vom Reformer
- 300: manuelles Absperrventil
- 310: Filter

## Patentansprüche

1. Unterseeboot mit wenigstens einer ersten Brennstoffzelle und wenigstens einem ersten Reformer, wobei der wenigstens eine erste Reformer zur Herstellung von Wasserstoff aus Methanol ausgebildet ist, wobei das Unterseeboot wenigstens einen ersten Tank (10, 11, 12, 13, 14, 15, 16, 17), einen zweiten Tank (10, 11, 12, 13, 14, 15, 16, 17) und einen dritten Tank (10, 11, 12, 13, 14, 15, 16, 17) aufweist, wobei der erste Tank (10, 11, 12, 13, 14, 15, 16, 17) mit dem Reformer für Fluidtransport verbindbar ist, wobei der zweiten Tank (10, 11, 12, 13, 14, 15, 16, 17) mit dem Reformer für Fluidtransport verbindbar ist, wobei der dritte Tank (10, 11, 12, 13, 14, 15, 16, 17) mit dem Reformer für Fluidtransport verbindbar ist, wobei der erste Tank (10, 11, 12, 13, 14, 15, 16, 17) mit dem zweiten Tank (10, 11, 12, 13, 14, 15, 16, 17) für Fluidtransport verbindbar ist, wobei der erste Tank (10, 11, 12, 13, 14, 15, 16, 17) mit dem dritten Tank (10, 11, 12, 13, 14, 15, 16, 17) für Fluidtransport verbindbar ist, wobei der zweite Tank (10, 11, 12, 13, 14, 15, 16, 17) mit dem dritten Tank (10, 11, 12, 13, 14, 15, 16, 17) für Fluidtransport verbindbar ist, wobei der erste Tank (10, 11, 12, 13, 14, 15, 16, 17) an der Unterseite mit einem ersten Auslassventil (20, 21, 22, 23, 24, 25, 26, 27) verbunden ist, dass der erste Tank (10, 11, 12, 13, 14, 15, 16, 17) an der Oberseite mit einem ersten Einlassventil (30, 31, 32, 33, 34, 35, 36, 37) verbunden ist, dass der zweite Tank (10, 11, 12, 13, 14, 15, 16, 17) an der Unterseite mit einem zweiten Auslassventil (20, 21, 22, 23, 24, 25, 26, 27) verbunden ist, dass der zweiten Tank (10, 11, 12, 13, 14, 15, 16, 17) an der Oberseite mit einem zweiten Einlassventil (30, 31, 32, 33, 34, 35, 36, 37) verbunden ist, dass der dritte Tank (10, 11, 12, 13, 14, 15, 16, 17) an der Unterseite mit einem dritten Auslassventil (20, 21, 22, 23, 24, 25, 26, 27) verbunden ist und dass der dritte Tank (10, 11, 12, 13, 14, 15, 16, 17) an der Oberseite mit einem dritten Einlassventil (30, 31, 32, 33, 34, 35, 36, 37) verbunden ist, **dadurch gekennzeichnet, dass** das erste Auslassventil (20, 21, 22, 23, 24, 25, 26, 27), das zweite Auslassventil (20, 21, 22, 23, 24, 25, 26, 27) und des dritte Auslassventil (20, 21, 22, 23, 24, 25, 26, 27) über eine Auslassverbindung (40) verbunden sind, wobei das erste Einlassventil (30, 31, 32, 33, 34, 35, 36, 37), das zweite Einlassventil (30, 31, 32, 33, 34, 35, 36, 37) und das dritte Einlassventil (30, 31, 32, 33, 34, 35, 36, 37) über eine Einlassverbindung (50) verbunden sind, wobei die Einlassverbindung (50) und die Auslassverbindung (40) über eine Pumpe (60, 101, 101, 120, 121) miteinander verbunden sind, wobei der erste Tank (10, 11, 12, 13, 14, 15, 16, 17) an der Unterseite mit einem ersten Methanolablassventil (80, 81, 82, 83, 84, 85, 86, 87) verbunden ist, dass der zweite Tank (10, 11, 12, 13, 14, 15, 16, 17) an der Unterseite mit einem zweiten Methanolablassventil (80, 81, 82, 83, 84, 85, 86, 87) verbunden ist und dass der dritte Tank (10, 11, 12, 13, 14, 15, 16, 17) an der Unterseite mit einem dritten Methanolablassventil (80, 81, 82, 83, 84, 85, 86, 87) verbunden ist, wobei das erste Methanolablassventil (80, 81, 82, 83, 84, 85, 86, 87), das zweite Methanolablassventil (80, 81, 82, 83, 84, 85, 86, 87) und das dritte Methanolablassventil (80, 81, 82, 83, 84, 85, 86, 87) über eine Methanolablassverbindung (90) verbunden sind, wobei die Methanolablassverbindung (90) über wenigstens eine erste Methanolablasspumpe mit dem wenigstens einen ersten Reformer verbunden ist, wobei der erste Tank (10, 11, 12, 13, 14, 15, 16, 17) an der Unterseite mit einem ersten Wasserablassventil (110, 111, 112, 113, 114, 115, 116, 117) verbunden ist, dass der zweite Tank (10, 11, 12, 13, 14, 15, 16, 17) an der Unterseite mit einem zweiten Wasserablassventil (110, 111, 112, 113, 114, 115, 116, 117) verbunden ist und dass der dritte Tank (10, 11, 12, 13, 14, 15, 16, 17) an der Unterseite mit einem dritten Wasserablassventil (110, 111, 112, 113, 114, 115, 116, 117) verbunden ist, wobei das erste Wasserablassventil (110, 111, 112, 113, 114, 115, 116, 117), das zweite Wasserablassventil (110, 111, 112, 113, 114, 115, 116, 117) und das dritte Wasserablassventil (110, 111, 112, 113, 114, 115, 116, 117) über eine Wasserablassverbindung (150) verbunden sind, wobei die Wasserablassverbindung (150) über wenigstens eine erste Wasserablasspumpe mit dem wenigstens einen ersten Reformer verbunden ist.

2. Unterseeboot nach Anspruch 1, **dadurch gekennzeichnet, dass** die Einlassverbindung (50) mit einer Betankungskupplung (70) verbunden ist.

3. Unterseeboot nach einem der vorhergehenden Ansprüche, **dadurch gekennzeichnet, dass** der erste Tank (10, 11, 12, 13, 14, 15, 16, 17), der zweite Tank (10, 11, 12, 13, 14, 15, 16, 17) und der dritte Tank (10, 11, 12, 13, 14, 15, 16, 17) gegenüber der Atmosphäre des Unterseeboots abgeschlossen sind, wobei das Unterseeboot eine Vorrichtung zur Einleitung von Inertgas in wenigstens den ersten Tank (10, 11, 12, 13, 14, 15, 16, 17), den zweiten Tank (10, 11, 12, 13, 14, 15, 16, 17) und den dritten Tank (10, 11, 12, 13, 14, 15, 16, 17) aufweist.

4. Unterseeboot nach Anspruch 3, **dadurch gekennzeichnet, dass** das Inertgas Stickstoff, Kohlendioxid, Helium, Neon, Argon oder ein Gemisch hieraus ist.

5. Unterseeboot nach einem der vorhergehenden Ansprüche, **dadurch gekennzeichnet, dass** wenigstens zwei Tanks (10, 11, 12, 13, 14, 15, 16, 17) zueinander benachbart angeordnet sind, wobei die zwei zueinander benachbarten Tanks (10, 11, 12, 13, 14, 15, 16, 17) an der Oberseite mit einem Überlaufrohr verbunden sind, wobei die Verbindungen zwischen dem Überlaufrohr und den Tanks (10, 11, 12, 13, 14, 15, 16, 17) jeweils auf der dem benachbarten Tank (10, 11, 12, 13, 14, 15, 16, 17) gegenüberliegenden Seite angeordnet sind.

6. Unterseeboot nach einem der vorhergehenden Ansprüche, **dadurch gekennzeichnet, dass** das Unterseeboot wenigstens einen Ausgasungstank aufweist.

7. Unterseeboot nach Anspruch 6, **dadurch gekennzeichnet, dass** das Unterseeboot einen kathodenseitigen Wasserabscheider aufweist, wobei der kathodenseitige Wasserabscheider mit der Kathodenseite der wenigstens einen Brennstoffzelle verbunden ist, wobei der kathodenseitige Wasserabscheider mit dem Ausgasungstank verbunden ist.

8. Unterseeboot nach einem der Ansprüche 6 oder 7, **dadurch gekennzeichnet, dass** der Ausgasungstank mit dem Reformer zur Überführung von Kondensat aus dem Reformer in den Ausgasungstank verbunden ist.

9. Unterseeboot nach einem der Ansprüche 6 bis 8, **dadurch gekennzeichnet, dass** der Ausgasungstank mit der Atmosphäre des Unterseeboots verbunden ist.

10. Unterseeboot nach einem der vorhergehenden Ansprüche, **dadurch gekennzeichnet, dass** das Unterseeboot insgesamt acht Tanks (10, 11, 12, 13, 14, 15, 16, 17) aufweist, wobei vier Tanks (10, 11, 12, 13, 14, 15, 16, 17) auf der Steuerbordseite und vier Tanks (10, 11, 12, 13, 14, 15, 16, 17) auf der Backbordseite angeordnet sind.

11. Unterseeboot nach einem der vorhergehenden Ansprüche, **dadurch gekennzeichnet, dass** jeder Tank (10, 11, 12, 13, 14, 15, 16, 17) nur einen Einlass für Flüssigkeiten auf der Oberseite und einen Auslass für Flüssigkeiten auf der Unterseite aufweist.

12. Verfahren zum Betreiben eines Unterseeboots nach einem der vorhergehenden Ansprüche, wobei wenigstens ein erster Tank (10, 11, 12, 13, 14, 15, 16, 17) mit Methanol befüllt ist, wobei wenigstens ein zweiter Tank (10, 11, 12, 13, 14, 15, 16, 17) mit Wasser befüllt ist, wobei Methanol aus dem ersten Tank (10, 11, 12, 13, 14, 15, 16, 17) in wenigstens einen ersten Reformer befördert wird, wobei Wasser aus dem zweiten Tank (10, 11, 12, 13, 14, 15, 16, 17) in den wenigstens einen ersten Reformer befördert wird, wobei Reaktionswasser von der Brennstoffzelle in den zweiten Tank (10, 11, 12, 13, 14, 15, 16, 17) befördert wird, wobei Kondensat vom Reformer in den zweiten Tank (10, 11, 12, 13, 14, 15, 16, 17) befördert wird.

13. Verfahren nach Anspruch 12, **dadurch gekennzeichnet, dass** Methanol aus dem ersten Tank (10, 11, 12, 13, 14, 15, 16, 17) entnommen wird, bis der Füllstand unter 5 % des Tankvolumens, bevorzugt unter 3 % des Tankvolumens, besonders bevorzugt unter 2 % des Tankvolumens ist, wobei der Füllstand über 1 % des Tankvolumens ist.

14. Verfahren nach Anspruch 13, **dadurch gekennzeichnet, dass** in den ersten Tank (10, 11, 12, 13, 14, 15, 16, 17) mit einem Füllstand von 1 bis 5 %, bevorzugt von 1 bis 3 %, besonders bevorzugt von 1 bis 2 % des Tankvolumens Methanol Reaktionswasser von der Brennstoffzelle und/oder Kondensat vom Reformer befördert wird.

15. Verfahren nach einem der Ansprüche 12 bis 14, **dadurch gekennzeichnet, dass** Wasser aus dem zweiten Tank (10, 11, 12, 13, 14, 15, 16, 17) entnommen wird, bis der Füllstand unter 5 % des Tankvolumens, bevorzugt unter 3 % des Tankvolumens, besonders bevorzugt unter 2 % des Tankvolumens ist, wobei der Füllstand über 1 % des Tankvolumens ist.

16. Verfahren nach Anspruch 15, **dadurch gekennzeichnet, dass** in den zweiten Tank (10, 11, 12, 13, 14, 15, 16, 17) mit einem Füllstand von 1 bis 5 %, bevorzugt von 1 bis 3 %, besonders bevorzugt von 1 bis 2 % des Tankvolumens Wasser Methanol befördert wird.

## Claims

1. A submarine having at least one first fuel cell and at least one first reformer, wherein the at least one first reformer is configured to produce hydrogen from methanol, wherein the submarine has at least one first tank (10, 11, 12, 13, 14, 15, 16, 17), a second tank (10, 11, 12, 13, 14, 15, 16, 17) and a third tank (10, 11, 12, 13, 14, 15, 16, 17), wherein the first tank (10, 11, 12, 13, 14, 15, 16, 17) being connectable to the reformer for fluid transport, wherein the second tank (10, 11, 12, 13, 14, 15, 16, 17) can be connected to the reformer for fluid transport, wherein the third tank (10, 11, 12, 13, 14, 15, 16, 17) can be connected to the reformer for fluid transport, wherein the first tank (10, 11, 12, 13, 14, 15, 16, 17) can be connected to the second tank (10, 11, 12, 13, 14, 15, 16, 17) for fluid transport, 17) for fluid transport, wherein the first tank (10, 11, 12, 13, 14, 15, 16, 17) is connectable to the third tank (10, 11, 12, 13, 14, 15, 16, 17) for fluid transport, wherein the second tank (10, 11, 12, 13, 14, 15, 16, 17) being connectable to the third tank (10, 11, 12, 13, 14, 15, 16, 17) for fluid transport, the first tank (10, 11, 12, 13, 14, 15, 16, 17) being connected on the underside to a first outlet valve (20, 21, 22, 23, 24, 25, 26, 27), the first tank (10, 11, 12, 13, 14, 15, 16, 17) being connected on the upper side to a first inlet valve (30, 31, 32, 33, 34, 35, 36, 37) at the top, that the second tank (10, 11, 12, 13, 14, 15, 16, 17) is to a second outlet valve (20, 21, 22, 23, 24, 25, 26, 27) at the bottom, that the second tank (10, 11, 12, 13, 14, 15, 16, 17) is connected at the top to a second inlet valve (30, 31, 32, 33, 34, 35, 36, 37), that the third tank (10, 11, 12, 13, 14, 15, 16, 17) is connected at the bottom to a third outlet valve (20, 21, 22, 23, 24, 25, 26, 27), and that the third tank (10, 11, 12, 13, 14, 15, 16, 17) is connected at the bottom to a third outlet valve (20, 21, 22, 23, 24, 25, 26, 27), 14, 15, 16, 17) is connected on the upper side to a third inlet valve (30, 31, 32, 33, 34, 35, 36, 37) , **characterised in that** the first outlet valve (20, 21, 22, 23, 24, 25, 26, 27), the second outlet valve (20, 21, 22, 23, 24, 25, 26, 27) and the third outlet valve (20, 21, 22, 23, 24, 25, 26, 27) are connected to a second outlet valve (20, 21, 22, 23, 24, 25, 26, 27), 21, 22, 23, 24, 25, 26, 27) are connected via an outlet connection (40), wherein the first inlet valve (30, 31, 32, 33, 34, 35, 36, 37), the second inlet valve (30, 31, 32, 33, 34, 35, 36, 37) and the third inlet valve (30, 31, 32, 33, 34, 35, 36, 37) are connected via an inlet connection (40), 37) are connected via an inlet connection (50), wherein the inlet connection (50) and the outlet connection (40) are connected to one another via a pump (60, 101, 101, 120, 121), wherein the first tank (10, 11, 12, 13, 14, 15, 16, 17) is connected on the underside to a first methanol drain valve (80, 81, 82, 83, 84, 85, 86, 87) on the underside, that the second tank (10, 11, 12, 13, 14, 15, 16, 17) is connected to a second methanol drain valve (80, 81, 82, 83, 84, 85, 86, 87) on the underside, and that the third tank (10, 11, 12, 13, 14, 15, 16, 17) is connected to a second methanol drain valve (80, 81, 82, 83, 84, 85, 86, 87) on the underside, 17) is connected on the underside to a third methanol drain valve (80, 81, 82, 83, 84, 85, 86, 87), wherein the first methanol drain valve (80, 81, 82, 83, 84, 85, 86, 87), the second methanol drain valve (80, 81, 82, 83, 84, 85, 86, 87) and the third methanol drain valve (80, 81, 82, 83, 84, 85, 86, 87) are connected to each other via a methanol discharge valve (80, 81, 82, 83, 84, 85, 86, 87), 86, 87) are connected via a methanol discharge connection (90), wherein the methanol discharge connection (90) is connected to the at least one first reformer via at least one first methanol discharge pump, wherein the first tank (10, 11, 12, 13, 14, 15, 16, 17) is connected on the underside to a first water drain valve (110, 111, 112, 113, 114, 115, 116, 117), **in that** the second tank (10, 11, 12, 13, 14, 15, 16, 17) is connected on the underside to a second water drain valve (110, 111, 112, 113, 114, 115, 116, 117), and **in that** the third tank (10, 11, 12, 13, 14, 116, 117) is connected on the underside to a second water drain valve (110, 111, 112, 113, 114, 115, 116, 117), 11, 12, 13, 14, 15, 16, 17) is connected at the underside to a third water drain valve (110, 111, 112, 113, 114, 115, 116, 117), wherein the first water drain valve (110, 111, 112, 113, 114, 115, 116, 117), the second water drain valve (110, 111, 112, 113, 114, 115, 116, 117) and the third water drain valve (110, 111, 112, 113, 114, 115, 116, 117) are connected at the underside to a third water drain valve (110, 111, 112, 113, 114, 115, 116, 117), 117) and the third water drain valve (110, 111, 112, 113, 114, 115, 116, 117) are connected via a water drain connection (150), wherein the water drain connection (150) is connected to the at least one first reformer via at least one first water drain pump.

2. Submarine according to claim 1, **characterised in that** the inlet connection (50) is connected to a refuelling coupling (70).

3. Submarine according to one of the preceding claims, **characterised in that** the first tank (10, 11, 12, 13, 14, 15, 16, 17), the second tank (10, 11, 12, 13, 14, 15, 16, 17) and the third tank (10, 11, 12, 13, 14, 15, 16, 17) are sealed off from the atmosphere of the submarine, wherein the submarine has a device for introducing inert gas into at least the first tank (10, 11, 12, 13, 14, 15, 16, 17), the second tank (10, 11, 12, 13, 14, 15, 16, 17) and the third tank (10, 11, 12, 13, 14, 15, 16, 17).

4. The submarine according to claim 3, **characterised in that** the inert gas is nitrogen, carbon dioxide, helium, neon, argon or a mixture thereof.

5. Submarine according to one of the preceding claims, **characterised in that** at least two tanks (10, 11, 12, 13, 14, 15, 16, 17) are arranged adjacent to one another, wherein the two tanks (10, 11, 12, 13, 14, 15, 16, 17) adjacent to one another are connected at the top to an overflow pipe, wherein the connections between the overflow pipe and the tanks (10, 11, 12, 13, 14, 15, 16, 17) are each connected on the side adjacent to the adjacent tank, 17) are connected at the top to an overflow pipe, the connections between the overflow pipe and the tanks (10, 11, 12, 13, 14, 15, 16, 17) being arranged in each case on the side opposite the neighbouring tank (10, 11, 12, 13, 14, 15, 16, 17).

6. Submarine according to one of the preceding claims, **characterised in that** the submarine has at least one degassing tank.

7. Submarine according to claim 6, **characterised in that** the submarine has a water separator on the cathode side, the water separator on the cathode side being connected to the cathode side of the at least one fuel cell, the water separator on the cathode side being connected to the degassing tank.

8. Submarine according to one of claims 6 or 7, **characterised in that** the outgassing tank is connected to the reformer for transferring condensate from the reformer to the outgassing tank.

9. Submarine according to one of claims 6 to 8, **characterised in that** the degassing tank is connected to the atmosphere of the submarine.

10. Submarine according to one of the preceding claims, **characterised in that** the submarine has a total of eight tanks (10, 11, 12, 13, 14, 15, 16, 17), four tanks (10, 11, 12, 13, 14, 15, 16, 17) being arranged on the starboard side and four tanks (10, 11, 12, 13, 14, 15, 16, 17) being arranged on the port side.

11. Submarine according to one of the preceding claims, **characterised in that** each tank (10, 11, 12, 13, 14, 15, 16, 17) has only one inlet for liquids on the upper side and one outlet for liquids on the lower side.

12. Method for operating a submarine according to one of the preceding claims, wherein at least one first tank (10, 11, 12, 13, 14, 15, 16, 17) is filled with methanol, wherein at least one second tank (10, 11, 12, 13, 14, 15, 16, 17) is filled with water, wherein methanol is conveyed from the first tank (10, 11, 12, 13, 14, 15, 16, 17) into at least one first reformer, wherein water is conveyed from the second tank (10, 11, 12, 13, 14, 15, 16, 17) into the at least one first reformer, wherein reaction water is conveyed from the fuel cell into the second tank (10, 11, 12, 13, 14, 15, 16, 17), wherein condensate is conveyed from the reformer into the second tank (10, 11, 12, 13, 14, 15, 16, 17).

13. Method according to claim 12, **characterised in that** methanol is removed from the first tank (10, 11, 12, 13, 14, 15, 16, 17) until the fill level is below 5% of the tank volume, preferably below of the tank volume, particularly preferably below of the tank volume, the fill level being above 1% of the tank volume.

14. Process according to claim 13, **characterised in that** methanol reaction water from the fuel cell and/or condensate from the reformer is conveyed into the first tank (10, 11, 12, 13, 14, 15, 16, 17) with a filling level of 1 to 5 %, preferably 1 to 3 %, particularly preferably 1 to 2 % of the tank volume.

15. Method according to one of claims 12 to 14, **characterised in that** water is removed from the second tank (10, 11, 12, 13, 14, 15, 16, 17) until the level is below 5 % of the tank volume, preferably below 3 % of the tank volume, particularly preferably below 2 % of the tank volume, the level being above 1 % of the tank volume.

16. Process according to claim 15, **characterised in that** water methanol is conveyed into the second tank (10, 11, 12, 13, 14, 15, 16, 17) with a filling level of 1 to 5%, preferably 1 to 3%, particularly preferably 1 to 2% of the tank volume.

## Revendications

1. Sous-marin comportant au moins une première pile à combustible et au moins un premier reformeur, dans lequel le premier reformeur au moins est configuré pour produire de l'hydrogène à partir de méthanol, dans lequel le sous-marin comporte au moins un premier réservoir (10, 11, 12, 13, 14, 15, 16, 17), un deuxième réservoir (10, 11, 12, 13, 14, 15, 16, 17) et un troisième réservoir (10, 11, 12, 13, 14, 15, 16, 17), 11, 12, 13, 14, 15, 16, 17), le premier réservoir (10, 11, 12, 13, 14, 15, 16, 17) pouvant être raccordé au reformeur pour le transport des fluides, le deuxième réservoir (10, 11, 12, 13, 14, 15, 16, 17) pouvant être raccordé au reformeur pour le transport des fluides, le troisième réservoir (10, 11, 12, 13, 14, 15, 16, 17) pouvant être raccordé au reformeur pour le transport des fluides, le troisième réservoir (10, 11, 12, 13, 14, 15, 16, 17) pouvant être raccordé au reformeur pour le transport des fluides, 17) peut être connecté au reformeur pour le transport des fluides, dans lequel le premier réservoir (10, 11, 12, 13, 14, 15, 16, 17) peut être connecté au deuxième réservoir (10, 11, 12, 13, 14, 15, 16, 17) pour le transport des fluides, 17) pour le transport des fluides, dans lequel le premier réservoir (10, 11, 12, 13, 14, 15, 16, 17) peut être connecté au troisième réservoir (10, 11, 12, 13, 14, 15, 16, 17) pour le transport des fluides, dans lequel le premier réservoir (10, 11, 12, 13, 14, 15, 16, 17) peut être connecté au troisième réservoir (10, 11, 12, 13, 14, 15, 16, 17) pour le transport de fluides, le deuxième réservoir (10, 11, 12, 13, 14, 15, 16, 17) pouvant être relié au troisième réservoir (10, 11, 12, 13, 14, 15, 16, 17) pour le transport de fluides , le premier réservoir (10, 11, 12, 13, 14, 15, 16, 17) étant relié sur la face inférieure à une première soupape de sortie (20, 21, 22, 23, 24, 25, 26, 27), que le premier réservoir (10, 11, 12, 13, 14, 15, 16, 17) est relié sur la face supérieure à une première vanne d'entrée (30, 31, 32, 33, 34, 35, 36, 37) en haut, que le second réservoir (10, 11, 12, 13, 14, 15, 16, 17) est relié à une seconde vanne de sortie (20, 21, 22, 23, 24, 25, 26, 27) en bas, que le second réservoir (10, 11, 12, 13, 14, 15, 16, 17) est relié à une seconde vanne de sortie (20, 21, 22, 23, 24, 25, 26, 27) en bas, que le second réservoir (10, 11, 12, 13, 14, 15, 16, 17) est relié en haut à une deuxième vanne d'entrée (30, 31, 32, 33, 34, 35, 36, 37), que le troisième réservoir (10, 11, 12, 13, 14, 15, 16, 17) est relié en bas à une troisième vanne de sortie (20, 21, 22, 23, 24, 25, 26, 27), et que le troisième réservoir (10, 11, 12, 13, 14, 15, 16, 17) est relié en bas à une troisième vanne de sortie (20, 21, 22, 23, 24, 25, 26, 27), et que le troisième réservoir (10, 11, 12, 13, 14, 15, 16, 17) est relié en bas à une troisième vanne de sortie (20, 21, 22, 23, 24, 25, 26, 27), 14, 15, 16, 17) est relié en haut à une troisième vanne d'entrée (30, 31, 32, 33, 34, 35, 36, 37) , **caractérisé en ce que** la première vanne de sortie (20, 21, 22, 23, 24, 25, 26, 27), la deuxième vanne de sortie (20, 21, 22, 23, 24, 25, 26, 27) et la troisième vanne de sortie (20, 21, 22, 23, 24, 25, 26, 27) sont reliées à une troisième vanne d'entrée (30, 31, 32, 33, 34, 35, 36, 37), 27) et la troisième vanne de sortie (20, 21, 22, 23, 24, 25, 26, 27) sont reliées à une deuxième vanne de sortie (20, 21, 22, 23, 24, 25, 26, 27), 21, 22, 23, 24, 25, 26, 27) sont reliées par une connexion de sortie (40), dans laquelle la première vanne d'entrée (30, 31, 32, 33, 34, 35, 36, 37), la deuxième vanne d'entrée (30, 31, 32, 33, 34, 35, 36, 37) et la troisième vanne d'entrée (30, 31, 32, 33, 34, 35, 36, 37) sont reliées par une connexion d'entrée (40), 37) sont reliées par une connexion d'entrée (50), dans laquelle la connexion d'entrée (50) et la connexion de sortie (40) sont reliées l'une à l'autre par une pompe (60, 101, 101, 120, 121), dans laquelle le premier réservoir (10, 11, 12, 13, 14, 15, 16, 17) est relié sur la face inférieure à une première vanne de vidange de méthanol (80, 81, 82, 83, 84, 85, 86, 87), que le deuxième réservoir (10, 11, 12, 13, 14, 15, 16, 17) est relié sur la face inférieure à une deuxième vanne de vidange de méthanol (80, 81, 82, 83, 84, 85, 86, 87), et que le troisième réservoir (10, 11, 12, 13, 14, 15, 16, 17) est relié sur la face inférieure à une deuxième vanne de vidange de méthanol (80, 81, 82, 83, 84, 85, 86, 87), et que le troisième réservoir (10, 11, 12, 13, 14, 15, 16, 17) est relié à une deuxième soupape de vidange du méthanol (80, 81, 82, 83, 84, 85, 86, 87) sur la face inférieure, 17) est relié à une troisième soupape de vidange du méthanol (80, 81, 82, 83, 84, 85, 86, 87) sur la face inférieure, dans lequel la première soupape de vidange du méthanol (80, 81, 82, 83, 84, 85, 86, 87), la deuxième vanne de vidange du méthanol (80, 81, 82, 83, 84, 85, 86, 87) et la troisième vanne de vidange du méthanol (80, 81, 82, 83, 84, 85, 86, 87) sont reliées entre elles par une vanne de décharge du méthanol (80, 81, 82, 83, 84, 85, 86, 87), 86, 87) sont reliées entre elles par un raccord de décharge du méthanol (90), dans lequel le raccord d'évacuation du méthanol (90) est relié à au moins un premier reformeur par l'intermédiaire d'au moins une première pompe d'évacuation du méthanol, dans lequel le premier réservoir (10, 11, 12, 13, 14, 15, 16, 17) est relié sur le dessous à une première vanne de vidange d'eau (110, 111, 112, 113, 114, 115, 116, 117), dans lequel le deuxième réservoir (10, 11, 12, 13, 14, 15, 16, 17) est relié par le dessous à une deuxième vanne de vidange (110, 111, 112, 113, 114, 115, 116, 117), et **en ce que** le troisième réservoir (10, 11, 12, 13, 14, 116, 117) est relié par le dessous à une deuxième vanne de vidange (110, 111, 112, 113, 114, 115, 116, 117), 11, 12, 13, 14, 15, 16, 17) est reliée sur la face inférieure à une troisième vanne de vidange d'eau (110, 111, 112, 113, 114, 115, 116, 117), dans laquelle la première vanne de vidange d'eau (110, 111, 112, 113, 114, 115, 116, 117), la deuxième vanne de vidange d'eau (110, 111, 112, 113, 114, 115, 116, 117) et la troisième vanne de vidange d'eau (110, 111, 112, 113, 114, 115, 116, 117) sont reliées sur la face inférieure à une deuxième vanne de vidange d'eau (110, 111, 112, 113, 114, 115, 116, 117), 117) sont reliées par le dessous à une troisième vanne de vidange d'eau (110, 111, 112, 113, 114, 115, 116, 117), 117) et la troisième vanne de vidange d'eau (110, 111, 112, 113, 114, 115, 116, 117) sont reliées par une connexion de vidange d'eau (150), dans laquelle la connexion de vidange d'eau (150) est reliée à au moins un premier reformeur par l'intermédiaire d'au moins une première pompe de vidange d'eau.

2. Sous-marin selon la revendication 1, **caractérisé par le fait que** la connexion d'entrée (50) est reliée à un raccord de ravitaillement (70).

3. Sous-marin selon l'une des revendications précédentes, **caractérisé par le fait que** le premier réservoir (10, 11, 12, 13, 14, 15, 16, 17), le deuxième réservoir (10, 11, 12, 13, 14, 15, 16, 17) et le troisième réservoir (10, 11, 12, 13, 14, 15, 16, 17) sont isolés de l'atmosphère du sous-marin, dans lequel le sous-marin est équipé d'un dispositif permettant d'introduire un gaz inerte dans au moins le premier réservoir (10, 11, 12, 13, 14, 15, 16, 17) (), le deuxième réservoir (10, 11, 12, 13, 14, 15, 16, 17) et le troisième réservoir (10, 11, 12, 13, 14, 15, 16, 17).

4. Le sous-marin selon la revendication 3, **caractérisé par le fait que** le gaz inerte est de l'azote, du dioxyde de carbone, de l'hélium, du néon, de l'argon ou un mélange de ces gaz.

5. Sous-marin selon l'une des revendications précédentes, **caractérisé en ce qu'**au moins deux réservoirs (10, 11, 12, 13, 14, 15, 16, 17) sont disposés l'un à côté de l'autre, les deux réservoirs (10, 11, 12, 13, 14, 15, 16, 17) adjacents l'un à l'autre étant reliés par le haut à un tuyau de trop-plein, les liaisons entre le tuyau de trop-plein et les réservoirs (10, 11, 12, 13, 14, 15, 16, 17) sont reliées sur le côté adjacent au réservoir voisin, 17) sont reliées sur le dessus à un tuyau de trop-plein, les connexions entre le tuyau de trop-plein et les réservoirs (10, 11, 12, 13, 14, 15, 16, 17) étant disposées dans chaque cas sur le côté opposé au réservoir voisin (10, 11, 12, 13, 14, 15, 16, 17).

6. Sous-marin selon l'une des revendications précédentes, **caractérisé par le fait que** le sous-marin comporte au moins un réservoir de dégazage.

7. Sous-marin selon la revendication 6, **caractérisé par le fait que** le sous-marin comporte un séparateur d'eau du côté de la cathode, le séparateur d'eau du côté de la cathode étant relié au côté de la cathode de l'au moins une pile à combustible, le séparateur d'eau du côté de la cathode étant relié au réservoir de dégazage.

8. Sous-marin selon l'une des revendications 6 ou 7, **caractérisé par le fait que** le réservoir de dégazage est relié au reformeur pour transférer le condensat du reformeur au réservoir de dégazage.

9. Sous-marin selon l'une des revendications 6 à 8, **caractérisé par le fait que** le réservoir de dégazage est relié à l'atmosphère du sous-marin.

10. Sous-marin selon l'une des revendications précédentes, **caractérisé en ce que** le sous-marin comporte au total huit réservoirs (10, 11, 12, 13, 14, 15, 16, 17), quatre réservoirs (10, 11, 12, 13, 14, 15, 16, 17) étant disposés à tribord et quatre réservoirs (10, 11, 12, 13, 14, 15, 16, 17) étant disposés à bâbord.

11. Sous-marin selon l'une des revendications précédentes, **caractérisé par le fait que** chaque réservoir (10, 11, 12, 13, 14, 15, 16, 17) n'a qu'une entrée de liquides sur la face supérieure et une sortie de liquides sur la face inférieure.

12. Procédé d'exploitation d'un sous-marin selon l'une des revendications précédentes, dans lequel au moins un premier réservoir (10, 11, 12, 13, 14, 15, 16, 17) est rempli de méthanol, dans lequel au moins un second réservoir (10, 11, 12, 13, 14, 15, 16, 17) est rempli d'eau, dans lequel le méthanol est transporté du premier réservoir (10, 11, 12, 13, 14, 15, 16, 17) dans au moins un premier reformeur, dans lequel l'eau de réaction est transportée du second réservoir (10, 11, 12, 13, 14, 15, 16, 17) dans le au moins un premier reformeur, 17) dans au moins un premier reformeur, l'eau étant acheminée du second réservoir (10, 11, 12, 13, 14, 15, 16, 17) dans au moins un premier reformeur, l'eau de réaction étant acheminée de la pile à combustible dans le second réservoir (10, 11, 12, 13, 14, 15, 16, 17), le condensat étant acheminé du reformeur dans le second réservoir (10, 11, 12, 13, 14, 15, 16, 17).

13. Procédé selon la revendication 12, **caractérisé par le fait que** le méthanol est retiré du premier réservoir (10, 11, 12, 13, 14, 15, 16, 17) jusqu'à ce que le niveau de remplissage soit inférieur à 5 % du volume du réservoir, de préférence inférieur au volume du réservoir, de préférence encore inférieur au volume du réservoir, le niveau de remplissage étant supérieur à 1 % du volume du réservoir.

14. Procédé selon la revendication 13, **caractérisé par le fait que** l'eau de réaction du méthanol provenant de la pile à combustible et/ou le condensat du reformeur est acheminé dans le premier réservoir (10, 11, 12, 13, 14, 15, 16, 17) avec un niveau de remplissage de 1 à 5 %, de préférence de 1 à 3 %, de préférence encore de 1 à 2 % du volume du réservoir.

15. Procédé selon l'une des revendications 12 à 14, **caractérisé par le fait que** l'eau est retirée du second réservoir (10, 11, 12, 13, 14, 15, 16, 17) jusqu'à ce que le niveau soit inférieur à 5 % du volume du réservoir, de préférence inférieur à 3 % du volume du réservoir, de préférence encore inférieur à 2 % du volume du réservoir, le niveau étant supérieur à 1 % du volume du réservoir.

16. Procédé selon la revendication 15, **caractérisé par le fait que l**'eau méthanol est acheminée dans le second réservoir (10, 11, 12, 13, 14, 15, 16, 17) avec un niveau de remplissage de 1 à 5%, de préférence de 1 à 3%, de préférence encore de 1 à 2% du volume du réservoir.
